# EUROPÄISCHE PATENTSCHRIFT

(11) **EP 3 051 991 B1**
(45) Veröffentlichungstag und Bekanntmachung des Hinweises auf die Patenterteilung: **06.06.2018**
(21) Anmeldenummer: 14761982.9
(22) Anmeldetag: 05.09.2014
(51) Int. Cl.: A47J 43/07

(54) **WERKZEUG FÜR EIN KÜCHENGERÄT MIT TRENNRIPPEN**
TOOL FOR A KITCHEN APPLIANCE, HAVING SEPARATING RIBS
OUTIL POUR USTENSILE DE CUISINE MUNI DE NERVURES DE SÉPARATION

(30) Priorität: 30.09.2013 DE 102013219834
(43) Veröffentlichungstag der Anmeldung: 10.08.2016
(73) Patentinhaber: BSH Hausgeräte GmbH, 81739 München (DE)
(72) Erfinder: DECMAN, Igor, 3232 Ponikva (SI); KOSCAK, Ales, 6230 Postojna (SI); ORBANIC, Henri, 1000 Ljubljana (SI)
(86) Internationale Anmeldenummer: PCT/EP2014/068912
(87) Internationale Veröffentlichungsnummer: WO 2015/043919

(56) Entgegenhaltungen:
- EP-A2- 1 854 390
- WO-A2-2010/122285

## Beschreibung

### Gebiet der Erfindung

Die Erfindung betrifft ein Werkzeug für ein Küchengerät mit einem an einem unteren Ende eines Schafts ausgeformten Kelch, in dem ein durch eine im Schaft gelagerte Welle in Drehung bringbares Messer angeordnet ist, und ausgehend vom Schaft an einer Innenwand des Kelchs zwei oder mehr Trennrippen angeordnet sind. Die Erfindung betrifft weiterhin ein Küchengerät.

### Hintergrund der Erfindung

Die deutsche Auslegeschrift DE 1170120 offenbart ein Zerkleinerungs- und Mischgerät für in einer Flüssigkeit befindliche Stoffe, das einen Propeller umfasst, der am Ende eines Schutzrohrs in der konkaven Seite einer Kalotte angeordnet ist. Auf der durch die Kalotte begrenzten Seite eines Mischraums sind außerdem der um die Achse gerichteten Rotation der Flüssigkeit entgegenstehende Trennwände vorgesehen, die den Mischraum radial unterteilen. Die Trennwände weisen Durchbrüche für die Flügel des Propellers auf. Die Ränder der Durchbrüche sind scharfkantig, um die Zerkleinerungswirkung zu unterstützen.

Die internationale Patentanmeldung WO 2010/122285 A2 offenbart ein auch als Zauberstab bezeichneten Werkzeugaufsatz für einen Handmixer. In einem Bearbeitungskopf des Zauberstabs ist ein dreiblättriges Arbeitsmesser angeordnet, das über eine Welle von einem Antriebsmotor in Rotation versetzt werden kann. Die Innenfläche der Seitenwand des Bearbeitungskopfes weist eine Vielzahl von Ausbuchtungen auf, die auf die Messerspitzen ausgerichtet sind. Die Ausbuchtungen sollen statt einer laminaren Flüssigkeitsströmung eine turbulente Strömung erzeugen, wodurch eine reduzierte Saugwirkung erreicht werden kann.

Aus der deutschen Offenlegungsschrift DE 43 21 653 A1 ist ein Stabmixer bekannt, an dessen Abdeckhaube sich vom Rand ausgehende in axialer Richtung erstreckende Ständer befinden, die Umlenkschaufeln bilden, die aus sich im Wesentlichen in radialer Richtung zur Antriebswelle erstreckenden Wänden bestehen. Die in Rotation versetzte pürierte Masse schlägt gegen die Umlenkschaufeln und wird von diesen derart radial nach außen gelenkt, dass die den Stabmixer umgebende Masse nicht zu stark in Rotation versetzt wird. Durch diese Strömungsumlenkung soll ein Ansaugen des Stabmixers an einem Gefäßboden stark reduziert werden.

Die deutsche Offenlegungsschrift DE 198 12 541 A1 offenbart eine glockenförmige Abschirmung für die Verwendung insbesondere in einem Stabmixer oder Handrührer, wobei die Abschirmung einen Raum bildet, in dem ein messerähnliches Arbeitswerkzeug angeordnet ist, das von einer Antriebswelle in Drehung versetzt werden kann. Die Oberfläche der Innenwand der Abschirmung weist an ihrem Umfang einzelne nach außen gerichtete Wandabschnitte zur Bildung von Freiräumen auf, die vorwiegend zur Umlenkung, Zerkleinerung und besseren Durchmischung sowie zur Aufnahme und Abfuhr von Nahrungsmitteln dienen.

Die europäische Patentanmeldung EP 1 854 390 A2 offenbart einen Mixstab mit einer Schutzglocke und einem exzentrisch in der Schutzglocke angeordneten Drehwerkzeug. Die umlaufende Wand der Schutzglocke weist eine Saug- und eine Drucköffnung auf. In einer Ausgestaltung des Mixstabs weist die Innenfläche der Schutzglocke ein reliefartiges Element auf, das den Durchlaufbereich des Mixflusses vor der Saugöffnung progressiv verringert.

### Der Erfindung zugrunde liegende Aufgabe

Der Erfindung liegt die Aufgabe zugrunde, ein gegenüber dem Stand der Technik verbessertes Werkzeug für ein Küchengerät bereitzustellen, wobei das Werkzeug einen an einem unteren Ende eines Schafts ausgeformten Kelch umfasst, in dem ein durch eine im Schaft gelagerte Welle in Drehung bringbares Messer angeordnet ist, und ausgehend vom Schaft an einer Innenwand des Kelchs zwei oder mehr Trennrippen angeordnet sind. Insbesondere soll durch die Erfindung eine im Betrieb eines Küchengeräts auftretende Saugwirkung deutlich reduziert werden, wodurch die Bedienung des Küchengeräts wesentlich vereinfacht werden soll. Außerdem soll ein verbessertes Küchengerät bereitgestellt werden.

### Erfindungsgemäße Lösung

Die Lösung der gestellten Aufgabe gelingt durch Bereitstellen eines Werkzeugs für ein Küchengerät mit einem an einem unteren Ende eines Schafts ausgeformten Kelch, in dem ein durch eine im Schaft gelagerte Welle in Drehung bringbares Messer angeordnet ist, und ausgehend vom Schaft an einer Innenwand des Kelchs zwei oder mehr Trennrippen angeordnet sind. Erfindungsgemäß liegen wenigstens 80% der Oberfläche der Trennrippen zwischen der Innenwand des Kelchs und einer gedachten, durch die Drehung des Messers definierten Rotationsfläche.

Dadurch, dass ein Großteil der Oberfläche der Trennrippen zwischen der Innenwand des Kelchs und einer durch die Drehung des Messers definierten Rotationsfläche liegt, kann im Betrieb des Küchengeräts die Bildung eines Wirbels gehemmt werden, ohne die Öffnung des Kelchs zu blockieren. Hierdurch wird eine Saugwirkung des Werkzeugs deutlich vermindert und damit die Bedienung des Küchengerätes wesentlich vereinfacht, ohne die Funktion des Werkzeugs zu beinträchtigen.

Ein erfindungsgemäßes Werkzeug kann zum Vermischen, Pürieren, Häckseln und/oder Zerschneiden eines Guts, insbesondere von Nahrungsmitteln, die weitestgehend fest und/oder flüssig sein können verwendbar sein. Beispielhafte Verwendungen umfassen das Pürieren von Obst und/oder Gemüse, das Mischen von Flüssigkeiten oder das Aufschlagen von Eiweiß oder Milchprodukten. Ein Küchengerät kann ein Handgerät, insbesondere ein Stabmixer oder Handrührer sein. Küchengeräte sind elektrisch betreibbar und werden entweder von Batterien oder einem Netzkabel mit Energie versorgt.

Das Werkzeug umfasst einen im Wesentlichen zylinderförmigen länglichen Schaft, in dessen Innerem eine Welle gelagert ist. An einem unteren Ende des Schafts ist ein Kelch ausgeformt, der sich nach unten aufweitet und geöffnet ist. Die Form des Kelchs kann im Wesentlichen die Form eine Glocke, einer Kugelkalotte oder eines Kegels aufweisen, wobei die Form nicht rotationssymmetrisch sein muss. Die Welle ragt an einem unteren Ende in einen durch eine Innenwand des Kelchs umgebenen Arbeitsraum hinein. An diesem unteren Ende der Welle ist ein im Wesentlichen quer zur Längsrichtung der Welle verlaufendes Messer angeordnet, das von der Welle in Rotation versetzt werden kann. Die Welle und das Messer rotieren im Betrieb des Küchengeräts um eine gemeinsame Drehachse, die in Längsrichtung des Schafts und meist entlang der Welle verläuft.

Im Betrieb mit einem Küchengerät wird durch die Rotation des Messers ein zu bearbeitendes Gut durch die Öffnung des Kelches angesaugt, zerkleinert und durch die vom Messer auf das Gut übertragenen Fliehkräfte zu einem großen Teil in Richtung der Innenwand des Kelchs beschleunigt. Insbesondere bei längerem Betrieb kann insbesondere bei einem im Wesentlichen flüssigen Gut und hoher Umdrehungszahl des Messers durch Bildung eines Wirbels eine erhebliche Saugwirkung auftreten, welche eine im Wesentlichen axial gerichtete Kraft auf das Werkzeug bewirkt, wodurch eine kontrollierte Führung des Geräts erschwert werden kann und im Extremfall dazu führen kann, dass sich das Werkzeug an einem Boden eines Gefäßes festsaugt, wodurch die Öffnung des Kelchs blockiert und ein Vermischen und Zerkleinern des Guts behindert werden kann. Um diesen Effekten entgegenzuwirken beziehungsweise um sie weitgehend zu eliminieren sind an der Innenwand des Kelchs Trennrippen angeordnet, welche eine Strömung des zu bearbeitenden Guts umlenken sollen. Die Saugwirkung ist allerding insofern erwünscht, als durch sie das zu bearbeitende Gut in den Arbeitsraum ansaugt wird.

Die Trennrippen heben sich vorwiegend in axialer Richtung von der Innenwand des Kelches ab. Ein überwiegender Anteil, erfindungsgemäß wenigstens 80%, ihrer Oberfläche ist zwischen der Innenwand und einer durch das rotierende Messer festgelegten Rotationsfläche angeordnet. Die Rotationsfläche ist eine gedachte, senkrecht zur Drehachse stehende Fläche, die durch Rotation einer in axialer Richtung am weitesten vom Schaft entfernten Messerspitze eingekreist wird. Die Rotationsfläche ist von einem Wirkungsbereich des Messers zu unterscheiden, der das durch Rotation des Messers erzeugte Volumen eines Rotationskörpers umfasst, in das kein Teil des Werkzeugs eindringend darf, weil sonst die Bewegung des Messers behindert würde.

Es hat sich gezeigt, dass die Trennrippen besonders effektiv der Bildung eines Wirbels entgegenwirken, ohne die Verarbeitung des Guts zu behindern, wenn wenigstens 80% ihrer Oberfläche zwischen der Rotationsfläche des Messers und der Innenwand des Kelches liegen. Das rotierende Messer beschleunig das Gut nämlich nicht nur radial sondern vor allem auch in axialer Richtung auf die Innenwand des Kelches zu. Die Saugwirkung entsteht daher vor allem in axialer Richtung. Um dieser Saugkraft besonders effizient entgegenzuwirken ist es daher vorteilhaft, die Strömung des zu verarbeitenden Guts durch Trennrippen umzulenken, die an der über der Rotationsfläche gelegenen Innenwand angeordnet sind. Ein kleiner Teil, erfindungsgemäß bis zu 20%, der Oberfläche der Trennrippen kann sich auch bis unter die Rotationsfläche erstrecken. Diese können sich bis zum Rand des Kelches erstrecken oder auch vom Rand des Kelches ausgehend zum Teil nach innen gerichtet sein. Von den 20% der Oberfläche der Trennrippen, die unter der Rotationsebene liegen, ragt insbesondere nur ein Bruchteil der Oberfläche in eine Projektion der Rotationsebene entlang der Drehachse. Somit wird die Öffnung zum Messer höchstens zu einem sehr geringen Teil verdeckt.

Die der Erfindung zugrunde liegende Aufgabe wird bei einem anderen gattungsgemäßen Werkzeug dadurch gelöst, dass die mindestens zwei Trennrippen vom Schaft oder von einer gedachten, zum Schaft konzentrischen zylindrischen Fläche ausgehend, im Wesentlichen tangential zum Schaft oder zur gedachten Fläche nach außen gerichtet sind. Insbesondere kann ein weiter außen liegender Bereich der Trennrippen in eine Spiralform übergehen, so dass ein Winkel zwischen den Trennrippen und der Innenwand des Kelches kleiner wird. Hierdurch kann ein Aufteilen eines einzelnen um die Drehachse zirkulierenden Wirbels in mehrere kleinere turbulente Wirbel begünstigt werden, wodurch eine Saugwirkung vermindert werden kann.

Die der Erfindung zugrunde liegende Aufgabe wird bei einem anderen gattungsgemäßen Werkzeug dadurch gelöst, dass die Trennrippen eine im Wesentlichen spiralförmige Kontur aufweisen, so dass jeweils eine Seitenwand der Trennrippen eine konkav geformte Oberfläche aufweist. Dadurch, dass sich die Trennrippen in axialer Richtung erheben, bildet sich ein Grat aus, so dass zwischen der Innenwand des Kelches und dem Grat Seitenwände der Trennrippen gebildet werden. Der Grat kann erfindungsgemäß eine spiralförmige Kontur haben, die beim Betrachten der Öffnung des Kelches in axialer Richtung sichtbar wird. Durch eine geschwungene, im Wesentlichen spiralförmige Kontur des Grats, insbesondere in einem äußeren Bereiche nahe dem Kelchrand erhält die der Drehachse zugewandte Seitenwand einer Trennrippe eine konkave Oberfläche. Abhängig von der Drehrichtung des Messers kann die konkav geformte Oberfläche im Betrieb des Küchengeräts der erzeugten Strömung zugewandt sein. Hierdurch kann vorteilhaft ein einzelner um die Drehachse zirkulierender Wirbel in mehrere kleinere turbulente Wirbel aufgeteilt werden, wodurch eine Saugwirkung vermindert werden kann. Hierdurch kann eine besonders einfach zu kontrollierende Bedienung des Küchengeräts ermöglicht werden.

Die Lösung der gestellten Aufgabe gelingt außerdem durch Bereitstellen eines Küchengeräts, das ein vorgenanntes Werkzeug umfasst.

### Bevorzugte Ausgestaltungen der Erfindung

Es ist bevorzugt, dass die zwei oder mehr Trennrippen in regelmäßigen Winkelabständen zueinander angeordnet sind, wobei die Winkel in einer Ebene senkrecht zu einer Drehachse und an der Drehachse anliegend gemessen werden. Bei einer Ausführung mit zwei Trennrippen liegen diese also auf gegenüberliegenden Seiten von der Drehachse um 180 Grad versetzt, bezogen auf einen Vollkreis von 360 Grad. Es hat sich gezeigt, dass eine regelmäßige Anordnung der Trennrippen einer störenden Wirbelbildung besonders effektiv entgegenwirken kann. Außerdem können sich die durch die Umlenkung der Strömung auftretenden auf den Schaft wirkenden Kräfte gegenseitig kompensieren, wodurch vorteilhafterweise die Bedienung des Küchengeräts erleichtert wird.

Vorzugsweise weist das Werkzeug drei Trennrippen auf, die entlang der Innenwand des Kelchs angeordnet sind. Vorzugsweise gehen die Trennrippen vom Schaft aus. Besonders vorzugsweise sind die drei Trennrippen in gleichen Winkelabständen von jeweils 120 Grad zueinander angeordnet, so dass sie den Arbeitsraum in drei gleich große Bereiche aufteilen. Es hat sich gezeigt, dass drei oder vier Trennrippen der Bildung eines Wirbels besonders effizient entgegenwirken und damit eine Saugwirkung minimieren. Daher weist eine alternative Ausführung des Werkzeugs vier Trennrippen auf, die entlang der Innenwand des Kelchs angeordnet sind. In diesem Fall weisen benachbarte Trennrippen vorzugsweise jeweils einen Winkelabstand von 90 Grad zueinander auf.

Es ist bevorzugt, dass ein Abstand, gemessen in axialer Richtung, zwischen einer dem Messer zugewandten Kante der Trennrippen und einem Wirkungsbereich des Messers höchstens 1 mm beträgt. Es hat sich herausgestellt, dass die Trennrippen einer Wirbelbildung besonders effizient entgegenwirken, wenn sie besonders nah am Wirkungsbereich des Messers angeordnet sind. Besonders vorzugsweise beträgt der Abstand höchstens 0.5 mm. Alternativ kann der Abstand mehr als 1.5 mm betragen, so dass ein erreichbarer Vorteil das Zulassen größerer Fertigungstoleranzen sein kann.

Es ist bevorzugt, dass die mindestens zwei Trennrippen vom Schaft ausgehend im Wesentlichen radial nach außen gerichtet sind. Hierdurch kann vorteilhaft erreicht werden, dass die Trennrippen einem um die Drehachse zirkulierenden Wirbel möglichst senkrecht entgegenstehen. Dadurch kann eine Strömung besonders turbulent werden, wodurch die Durchmischung und Zerkleinerung des zu bearbeitenden Guts besonders effizient werden kann. Bei einer turbulenten Strömung treten im Allgemeinen mehrere kleinere Wirbel auf, die auch in zueinander entgegengesetzter Richtung in verschiedenen Bereichen innerhalb und außerhalb des Kelches zirkulieren können. Im Gegensatz dazu bildet sich bei einer laminaren Strömung in der Regel nur ein größerer um die Drehachse zirkulierender Wirbel aus, der eine besonders starke Saugwirkung aufweisen kann. Außerdem minimiert eine turbulente Strömung die Saugwirkung besonders effektiv. Besonders vorzugsweise sind die Trennrippen in einem außen liegenden Bereich spiralförmig ausgebildet. Hierdurch kann die Umlenkung der Strömung noch weiter beeinflusst werden. Alternativ können die Trennrippen in einem Winkel von bis zu 20 Grad gegenüber einer radial nach außen zeigenden Richtung ausgerichtet sein. Hierdurch kann der Vorteil erreicht werden, dass das Gut weniger turbulent abgelenkt wird, was vorteilhaft ein unerwünschtes Spritzen eines weitgehend flüssigen Guts vermindern kann.

Es ist bevorzugt, dass jeweils eine Seitenwand der Trennrippen eine konvex geformte Oberfläche aufweist. Eine konvexe Oberfläche einer Seitenwand wird vorzugsweise durch eine geschwungene, im Wesentlichen spiralförmige Kontur der Trennrippen, insbesondere in einem äußeren Bereiche nahe dem Kelchrand erreicht. Besonders vorzugsweise weist eine Trennrippe eine geschwungene spiralförmige Kontur auf, so dass die eine Seitenwand eine konvexe Oberfläche und die andere Seitenwand eine konkave Oberfläche aufweist. Besonders vorzugsweise ist die konvex geformte Oberfläche der im Betrieb des Küchengeräts erzeugten Strömung zugewandt. Hierdurch kann vorteilhaft eine besonders turbulente Strömung erzeugt werden. Eine turbulente Strömung kann wie zuvor beschrieben eine wesentlich geringere Saugwirkung aufweisen, wodurch eine besonders einfach zu kontrollierende Bedienung des Küchengeräts ermöglicht werden kann.

In einer bevorzugten Ausführung des Werkzeugs, weist das Messer zwei oder mehr Klingenblätter auf. Die zwei oder mehr Klingenblätter können dabei unterschiedliche Größen und/oder Formen aufweisen. Vorzugsweise sind die Klingenblätter in regelmäßigen Winkelabständen zueinander angeordnet, so dass in vorteilhafter Weise die auf die Welle wirkenden Fliehkräfte ausgeglichen werden. Ein bevorzugtes Messer ist aus Stahl gefertigt. Besonders vorzugweise ist wenigstens ein Klingenblatt nach oben gekrümmt. Nochmals besonders vorzugsweise ist wenigstens ein Klingenblatt nach unten gekrümmt. Es ist bevorzugt, dass wenigstens eines der Klingenblätter eine Verwindung aufweist, so dass die Oberfläche des Klingenblatts einen erhöhten Anstellwinkel aufweist, wodurch im Betrieb eine axiale Strömung des zu bearbeitenden Guts in vorteilhafter Weise hervorgerufen wird, wodurch die Verarbeitung und Durchmischung des Guts beschleunigt wird. Ein bevorzugtes Messer ist von der Welle lösbar ausgeführt und kann somit den erreichbaren Vorteil haben, dass für unterschiedliche Anwendungen verschiedene Messer eingesetzt werden können, beziehungsweise ein beschädigtes Messer auf einfache Weise ersetzt werden kann.

In einer bevorzugten Ausführung der Erfindung erstrecken sich die mindestens zwei Trennrippen nach oben über den Kelch hinaus. Besonders vorzugsweise erstecken sind die Trennrippen entlang des Schafts angeordnet. Der erreichbare Vorteil ist, dass die Oberfläche der Trennrippen deutlich vergrößert werden kann, wodurch der Bildung eines Wirbels, der eine Saugwirkung erzeugt, noch effizienter entgegengewirkt werden kann. Besonders vorzugsweise erstrecken sich die Trennrippen mindestens 1 cm entlang der Längsachse des Schafts über den Kelch hinaus. Nochmals besonders vorzugsweise mindestens 2 cm. In einer alternativen Ausführung sind zwischen Schaft und den sich über den Kelch hinaus ersteckenden Trennrippen Schlitze angeordnet, durch die eine Strömung hindurchfließen kann. Hierdurch kann eine vorteilhafte Durchmischung des Guts erreicht werden.

Es ist bevorzugt, dass der Kelchrand Unebenheiten aufweist, so dass im Kontakt mit einer ebenen Fläche seitliche Durchlässe entstehen. Besonders vorzugsweise sind die Unebenheiten als in axialer Richtung in den Kelchrand eingreifende Vertiefungen im Kelchrand ausgeführt. Diese können beispielsweise eine Wellenform entlang des Umfangs des Kelchrands erzeugen. Alternativ sind die Unebenheiten als sich in axialer Richtung erstreckende Erhöhungen ausgeführt. Ein erreichbarer Vorteil eines uneben gestalteten Kelchrands ist, dass auch im Kontakt mit einem ebenen Gefäßboden seitliche Durchlässe entstehen, so dass stets ein Zuströmen von zu bearbeitendem Gut und eine Ausströmen von bearbeitetem in den oder aus dem Arbeitsraum gewährleistet werden kann. Wäre der Kelchrand eben und insbesondere senkrecht zur Längsachse des Schafts ausgeführt, könnte die Öffnung zum Arbeitsraum im Kelch durch den Gefäßboden verschlossen werden, wodurch ein weiteres Durchmischen und Verarbeiten des Guts behindert würde.

Ein bevorzugtes Werkzeug kann abnehmbar an ein Küchengerät angekuppelt werden. Ein bevorzugtes Küchengerät umfasst eine Antriebseinheit, die im Betrieb über eine Kupplung die im Schaft gelagerte Welle in Rotation versetzt. Eine bevorzugte Antriebseinheit ist elektromotorisch. Vorzugsweise weist das Werkzeug an einem oberen, dem Kelch gegenüberliegenden Ende des Schafts eine Kupplung auf. Eine bevorzugte Kupplung umfasst einen Verschlussmechanismus, der durch eine Drehung des Schafts oder Betätigen eines Knopfes, der entweder am Küchengerät oder am Werkzeug angeordnet ist, entriegelbar ist. Ein vom Küchengerät lösbares Werkzeug hat den erreichbaren Vorteil, dass es leichter gereinigt werden kann. Außerdem kann so das Küchengerät mit verschiedenen Werkzeugen kombinierbar sein. Das erfindungsgemäße Werkzeug kann außerdem als Zubehörteil für bereits verkaufte Küchengeräte angeboten werden. In einer alternativen Ausführung ist das Werkzeug fest mit einem Küchengerät verbunden und ist somit nicht abnehmbar.

### Kurzbeschreibung der Zeichnungen

Weitere vorteilhafte Ausgestaltungen werden nachfolgend anhand eines in den Zeichnungen dargestellten Ausführungsbeispiels, auf welches die Erfindung jedoch nicht beschränkt ist, näher beschrieben.

Es zeigen schematisch:
- Figur 1:: In Fig. 1 ist eine perspektivische Ansicht eines erfindungsgemäßen Werkzeugs dargestellt.
- Figur 2:: In Fig. 2 ist eine Schnittansicht des Kelches des in Fig. 1 gezeigten Werkzeugs dargestellt.
- Figur 3:: Fig. 3 zeigt eine Ansicht von unten auf die Öffnung des Kelchs des Werkzeugs aus Fig. 1.

### Ausführliche Beschreibung der Erfindung anhand von einem Ausführungsbeispiel

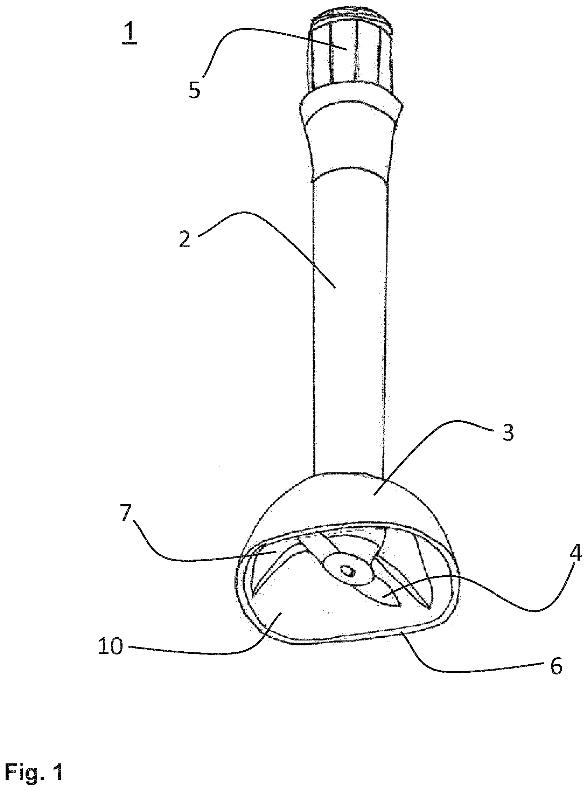

Fig. 1 zeigt ein erfindungsgemäßes Werkzeug 1 in perspektivischer Ansicht. An einem unteren Ende eines Schafts 2 ist ein im Wesentlichen glockenförmiger Kelch 3 ausgeformt, in dem ein Messer 4 angeordnet ist, welches über eine im Schaft 2 gelagerte Welle von einer nicht gezeigten in einem Küchengerät angeordneten Antriebseinheit in Drehung versetzt werden kann. Am entgegengesetzten Ende des Schafts ist eine Kupplung 5 angeordnet über die das Werkzeug mit dem Küchengerät lösbar verbunden werden kann. Der Kelch 3 weitet sich glockenförmig auf und weist eine Öffnung auf, über die das zu verarbeitende Gut, typischerweise weitestgehend flüssige oder zu verflüssigende Nahrungsmittel wie Obst und/oder Gemüse sowie Eier oder Milchprodukte, in den von der Innenwand 6 des Kelches umgrenzten Arbeitsraum gelangt. An einem jenseits einer Rotationsfläche des Messers 4 gelegenen Teil der Innenwand 6 sind in regelmäßigen Winkelabständen von120 Grad, bezogen auf einen Vollkreis von 360 Grad, drei Trennrippen 7 angeordnet, von denen aufgrund der Perspektive nur zwei zu sehen sind. In der gezeigten Ausführung sind der Schaft 2 sowie der Kelch 3 mit den Trennrippen 7 einstückig im Spritzgussverfahren aus Kunststoff gefertigt.

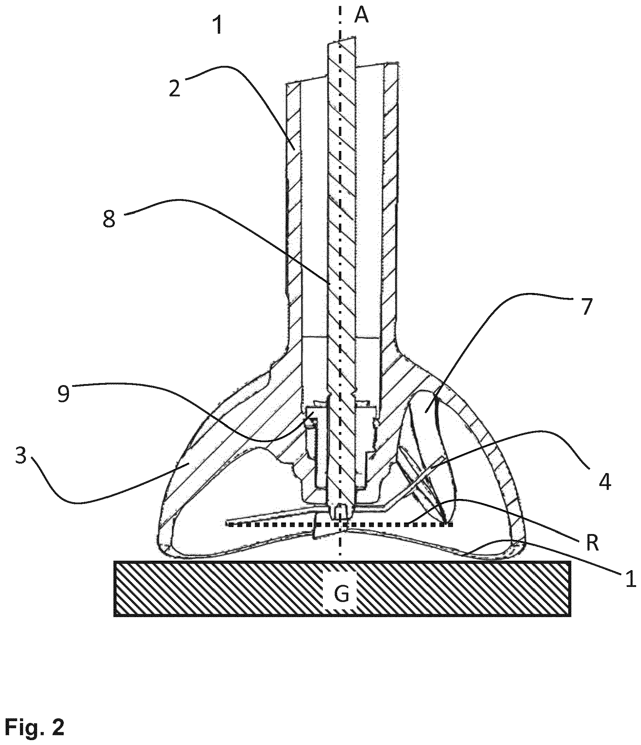

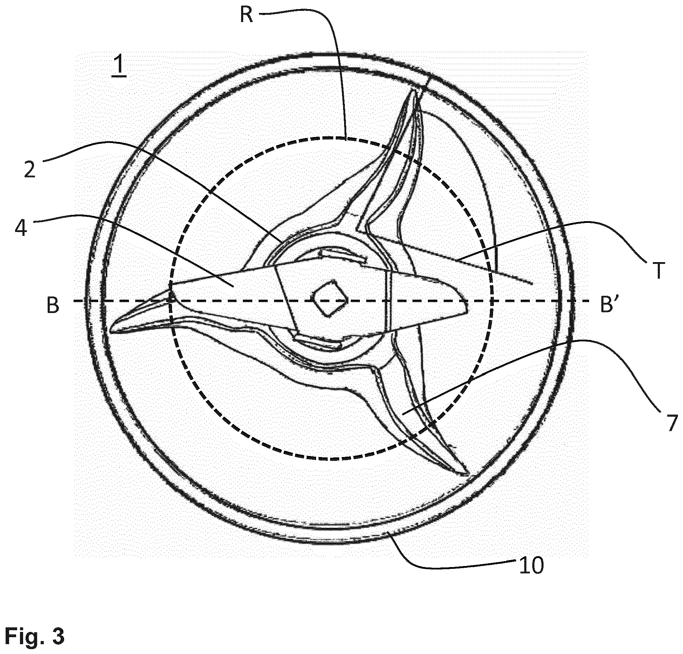

Weitere Details des Werkzeugs 1 werden aus der Schnittansicht in Fig. 2 ersichtlich. Der Schnitt verläuft in Längsrichtung durch die Achse A und durch eine der drei Trennrippen 7 entlang einer in Fig. 3 gezeigten gestrichelten Linie B-B'. Die Welle 8 ist koaxial zur Längsachse A im Schaft 2 gelagert, wobei ein Lager 9, das als selbstschmierendes Gleitlager ausgeführt ist, nahe am Messer 4 im Kelch 3 angeordnet ist. Die Längsachse A des Schafts 2 ist gleichzeitig auch die Drehachse, um die die Welle 8 und das im Betrieb Messer 4 rotieren. Die gepunktete Linie illustriert die Rotationsfläche R, die durch Rotation von der am tiefsten liegenden Messerspitze gebildet wird. Wie in der Fig. 2 zu erkennen, liegt die Oberfläche der Trennrippen 7 fast komplett über der Rotationsfläche R. Deutlicher als in Fig. 1 ist in der Schnittansicht zu erkennen, dass der Kelchrand 10 Unebenheiten aufweist und somit nicht bündig mit dem Boden eines Gefäßes G abschließt, wodurch seitliche Öffnungen entstehen durch die das zu bearbeitende Gut durchströmen kann.

Die Form der Trennrippen 7 wird insbesondere durch eine in Fig. 3 dargestellte Ansicht der Öffnung des Kelches 3 ersichtlich. Die drei Trennrippen 7 sind als leicht geschwungene, im Wesentlichen radial vom Schaft 2 ausgehend nach außen geformt und weisen je eine Seitenwand mit konkaver und konvexer Oberfläche auf und sind somit im Wesentlichen spiralförmig. Alternativ könnten die Trennrippen auch entlang einer Tangenten T, tangential zum Schaft nach außen geformt sein. Zusammen bilden sie eine Form, die an einem dreizackigen Stern mit geschwungenen Ästen erinnert. Bei einer Rotation des Messers 4 in Uhrzeigersinn, würde die entstehende Strömung auf die konkaven Seiten der Trennrippen 7 treffen und entgegen ihrer ursprünglichen Richtung umgelenkt werden. Durch eine in dieser Ansicht nicht zu erkennende Verwindung der Trennrippen 7 wird die Strömung gleichzeitig nach unten abgelenkt. Hierdurch kann einer Saugwirkung effektiv entgegengewirkt werden und zudem kann auch die Vermischung des zu bearbeitenden Guts schneller und effizienter erfolgen. Bei einer Rotation des Messers 4 entgegen dem Uhrzeigersinn, würde die entstehende Strömung auf die konvexen Seiten der Trennrippen 7 treffen. Hierdurch würden bevorzugt senkrecht zur Bildebene liegende Strudel entstehen, da die Strömung zur Innenwand 6 des Kelches 3 hin abgelenkt und von dort reflektiert werden würde. Diese Strudel würden ebenfalls einer Saugwirkung entgegenwirken, da sie die Bildung eines um die Drehachse A rotierenden Wirbels weitestgehend verhindern würden.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

### Bezugszeichenliste

- 1.: Werkzeug
- 2.: Schaft
- 3.: Kelch
- 4.: Messer
- 5.: Kupplung
- 6.: Innenwand
- 7.: Trennrippe
- 8.: Welle
- 9.: Lager
- 10.: Kelchrand
- A: Achse
- G: Gefäßboden
- R: Rotationsfläche
- T: Tangente

## Patentansprüche

1. Werkzeug (1) für ein Küchengerät mit einem an einem unteren Ende eines Schafts (2) ausgeformten Kelch (3), in dem ein durch eine im Schaft (2) gelagerte Welle (8) in Drehung bringbares Messer (4) angeordnet ist, und ausgehend vom Schaft (2) an einer Innenwand (10) des Kelchs (3) zwei oder mehr Trennrippen (7) angeordnet sind, **wobei** wenigstens 80% der Oberfläche der Trennrippen (7) zwischen der Innenwand (10) des Kelchs und einer gedachten, durch die Drehung des Messers (4) definierten Rotationsfläche (R) liegen, **dadurch gekennzeichnet, dass** die mindestens zwei Trennrippen (7) vom Schaft (2) oder von einer gedachten, zum Schaft (2) konzentrischen zylindrischen Fläche ausgehend, im Wesentlichen tangential zum Schaft (2) oder zur gedachten Fläche nach außen gerichtet sind .

2. Werkzeug (1) nach Oberbegriff von Anspruch 1, **dadurch gekennzeichnet, dass** die Trennrippen (7) eine im Wesentlichen spiralförmige Kontur aufweisen, so dass jeweils eine Seitenwand der Trennrippen (7) eine konkav geformte Oberfläche aufweist.

3. Werkzeug (1) nach einem der vorhergehenden Ansprüche, **dadurch gekennzeichnet, dass** die zwei oder mehr Trennrippen (7) in regelmäßigen Winkelabständen zueinander angeordnet sind, wobei die Winkel in einer Ebene senkrecht zu einer Drehachse (A) und an der Drehachse (A) anliegend gemessen werden.

4. Werkzeug (1) nach einem der vorhergehenden Ansprüche, **dadurch gekennzeichnet, dass** drei Trennrippen (7) entlang der Innenwand (10) des Kelchs (3) angeordnet sind.

5. Werkzeug (1) nach einem der vorhergehenden Ansprüche, **dadurch gekennzeichnet, dass** ein Abstand, gemessen in axialer Richtung, zwischen einer dem Messer (4) zugewandten Kante der Trennrippen (7) und einem Wirkungsbereich des Messers (4) höchstens 1 mm beträgt.

6. Werkzeug (1) nach einem der vorhergehenden Ansprüche, **dadurch gekennzeichnet, dass** die mindestens zwei Trennrippen (7) vom Schaft (2) ausgehend im Wesentlichen radial nach außen gerichtet sind.

7. Werkzeug (1) nach einem der vorhergehenden Ansprüche, **dadurch gekennzeichnet, dass** jeweils eine Seitenwand der Trennrippen (7) eine konvex geformte Oberfläche aufweiset.

8. Werkzeug (1) nach einem der vorhergehenden Ansprüche, **dadurch gekennzeichnet, dass** das Messer (4) zwei oder mehr Klingenblätter aufweist.

9. Werkzeug (1)' nach einem der vorhergehenden Ansprüche, **dadurch gekennzeichnet, dass** sich die mindestens zwei Trennrippen (7) nach oben über den Kelch (3) hinaus erstrecken.

10. Werkzeug (1) nach einem der vorhergehenden Ansprüche, **dadurch gekennzeichnet, dass** der Kelchrand (6) Unebenheiten aufweist, so dass im Kontakt mit einer ebenen Fläche (G) seitliche Durchlässe entstehen.

11. Werkzeug (1) nach einem der vorhergehenden Ansprüche, **dadurch gekennzeichnet, dass** das Werkzeug (1) abnehmbar an ein Küchengerät angekuppelt werden kann.

12. Küchengerät, **dadurch gekennzeichnet, dass** das Küchengerät ein Werkzeug (1) nach einem der vorhergehenden Ansprüche umfasst.

## Claims

1. Tool (1) for a kitchen appliance having a cup element (3) which is formed at a lower end of a stem (2) and in which is arranged a blade (4) which can be made to rotate by a shaft (8) mounted in the stem (2) and, proceeding from the stem (2), two or more separating ribs (7) are arranged on an inner wall (10) of the cup element (3), wherein at least 80% of the surface area of the separating ribs (7) is located between the inner wall (10) of the cup element and an imaginary surface of rotation (R) defined by the rotation of the blade (4), **characterised in that**, proceeding from the stem (2) or from an imaginary cylindrical surface concentric with the stem (2), the at least two separating ribs (7) are directed outwards substantially tangentially in relation to the stem (2) or to the imaginary surface.

2. Tool (1) according to the preamble of claim 1, **characterised in that** the separating ribs (7) have a substantially helical contour, so that a respective side wall of the separating ribs (7) has a concavely shaped surface.

3. Tool (1) according to one of the preceding claims, **characterised in that** the two or more separating ribs (7) are arranged at regular angular spacings from one another, wherein the angles are measured in a plane perpendicular to a rotational axis (A) and adjacent to the rotational axis (A).

4. Tool (1) according to one of the preceding claims, **characterised in that** three separating ribs (7) are arranged along the inner wall (10) of the cup element (3).

5. Tool (1) according to one of the preceding claims, **characterised in that** a spacing measured in the axial direction between an edge of the separating ribs (7) facing the blade (4) and an effective region of the blade (4) is at most 1 mm.

6. Tool (1) according to one of the preceding claims, **characterised in that**, proceeding from the stem (2), the at least two separating ribs (7) are oriented substantially radially outwardly.

7. Tool (1) according to one of the preceding claims, **characterised in that** in each case a side wall of the separating ribs (7) has a surface of concave shape.

8. Tool (1) according to one of the preceding claims, **characterised in that** the blade (4) has two or more cutting blades.

9. Tool (1) according to one of the preceding claims, **characterised in that** the at least two separating ribs (7) extend upwardly beyond the cup element (3).

10. Tool (1) according to one of the preceding claims, **characterised in that** the cup element edge (6) has uneven portions so that lateral through-passages are produced in contact with a planar surface (G).

11. Tool (1) according to one of the preceding claims, **characterised in that** the tool (1) may be removably coupled to a kitchen appliance.

12. Kitchen appliance, **characterised in that** the kitchen appliance comprises a tool (1) according to one of the preceding claims.

## Revendications

1. Outil (1) pour un ustensile de cuisine, doté d'une coupe (3) formée à une extrémité inférieure d'une tige (2), et dans laquelle est disposée un couteau (4) qui peut être mis en rotation par un arbre (8) monté dans la tige (2), et en partant de la tige (2) deux nervures de séparation (7) ou plus sont disposées sur une paroi intérieure (10) de la coupe (3), **sachant qu**'au moins 80 % de la surface des nervures de séparation (7) se trouvent entre la paroi intérieure (10) de la coupe et une surface de rotation (R) imaginaire définie par la rotation du couteau (4), **caractérisé en ce que** les au moins deux nervures de séparation (7), en partant de la tige (2) ou d'une surface cylindrique imaginaire concentrique à la tige (2), sont orientées vers l'extérieur de façon sensiblement tangentielle à la tige (2) ou à la surface imaginaire.

2. Outil (1) selon le préambule de la revendication 1, **caractérisé en ce que** les nervures de séparation (7) possèdent un contour sensiblement en forme de spirale, de sorte que respectivement une paroi latérale des nervures de séparation (7) présente une surface de forme concave.

3. Outil (1) selon l'une des revendications précédentes, **caractérisé en ce que** les deux nervures de séparation (7) ou plus sont disposées à des intervalles angulaires réguliers les unes par rapport autres, les angles étant mesurés dans un plan perpendiculaire à un axe de rotation (A) et adjacent à l'axe de rotation (A).

4. Outil (1) selon l'une des revendications précédentes, **caractérisé en ce que** trois nervures de séparation (7) sont disposées le long de la paroi intérieure (10) de la coupe (3).

5. Outil (1) selon l'une des revendications précédentes, **caractérisé en ce qu'**une distance, mesurée en direction axiale, entre une arête tournée vers le couteau (4) des nervures de séparation (7) et une zone d'action du couteau (4) est au maximum de 1 mm.

6. Outil (1) selon l'une des revendications précédentes, **caractérisé en ce que** les au moins deux nervures de séparation (7), en partant de la tige (2), sont dirigées sensiblement radialement vers l'extérieur.

7. Outil (1) selon l'une des revendications précédentes, **caractérisé en ce que** respectivement une paroi latérale des nervures de séparation (7) présente une surface de forme convexe.

8. Outil (1) selon l'une des revendications précédentes, **caractérisé en ce que** le couteau (4) possède deux lames ou plus.

9. Outil (1) selon l'une des revendications précédentes, **caractérisé en ce que** les au moins deux nervures de séparation (7) s'étendent vers le haut au-delà de la coupe (3).

10. Outil (1) selon l'une des revendications précédentes, **caractérisé en ce que** le bord (6) de la coupe présente des aspérités, de sorte que des passages latéraux se forment au contact avec une surface plane (G).

11. Outil (1) selon l'une des revendications précédentes, **caractérisé en ce que** l'outil (1) peut être couplé de manière amovible à un ustensile de cuisine.

12. Ustensile de cuisine, **caractérisé en ce que** l'ustensile de cuisine comprend un outil (1) selon l'une des revendications précédentes.
